# EUROPÄISCHE PATENTSCHRIFT

(11) **EP 4 445 236 B1**
(45) Veröffentlichungstag und Bekanntmachung des Hinweises auf die Patenterteilung: **08.07.2026**
(21) Anmeldenummer: 22830768.2
(22) Anmeldetag: 06.12.2022
(51) Int. Cl.: G05D 1/00

(54) **VERFAHREN ZUR LANDUNG EINES SENKRECHT STARTENDEN UND LANDENDEN FLUGGERÄTS, FLUGGERÄT UND LANDESYSTEM**
METHOD FOR LANDING AN AIRCRAFT WHICH TAKES OFF AND LANDS VERTICALLY, AIRCRAFT, AND LANDING SYSTEM
PROCÉDÉ D'ATTERRISSAGE D'UN AÉRONEF À DÉCOLLAGE ET ATTERRISSAGE VERTICAUX, AÉRONEF ET SYSTÈME D'ATTERRISSAGE

(30) Priorität: 07.12.2021 DE 102021132160
(43) Veröffentlichungstag der Anmeldung: 16.10.2024
(73) Patentinhaber: Wingcopter GmbH, 64331 Weiterstadt (DE)
(72) Erfinder: HESSELBARTH, Jonathan, 64283 Darmstadt (DE)
(74) Vertreter: Habermann Intellectual Property Partnerschaft von Patentanwälten mbB
(86) Internationale Anmeldenummer: PCT/EP2022/084636
(87) Internationale Veröffentlichungsnummer: WO 2023/104814

(56) Entgegenhaltungen:
- CN-A- 110 618 691
- US-A1- 2017 045 894
- US-A1- 2020 201 360
- DOTENCO SERGIU ET AL: "Autonomous Approach and Landing for a Low-Cost Quadrotor Using Monocular Cameras", 19 March 2015, 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, PAGE(S) 209 - 222, XP047529658

## Beschreibung

Die Erfindung betrifft ein Verfahren zur Landung eines senkrechts startenden und landenden Fluggeräts an einem vorgegebenen Landeplatz. Die Erfindung betrifft auch ein Fluggerät sowie ein Landesystem bestehend aus dem Fluggerät und dem Landeplatz.

Senkrecht startende und landende Fluggeräte sind aus dem Stand der Technik in unterschiedlichen Bauformen und Baugrößen bekannt und werden unter anderem als Drohnen und im militärischen Bereich eingesetzt. Diese Fluggeräte werden häufig auch zum Transport von Stückgut beispielsweise zum Pakettransport eingesetzt. Die Fluggeräte können manuell, teilautonom und vollständig autonom gesteuert werden.

Als Fluggeräte zum Transport von Stückgut werden beispielsweise Quadrocopter verwendet. Ein Quadrocopter ist ein Fluggerät, bei dem vier in einer Ebene angeordnete und senkrecht nach unten wirkenden Rotoren oder Propeller benutzt werden, um Auftrieb zu erzeugen. Der Vortrieb des Quadrocopters wird durch eine Neigung der Rotorebene erzeugt. Diese Fluggeräte können je nach Antriebsleistung eine gewisse Nutzlast über eine bestimmte Strecke transportieren. Die Reichweite ist je nach Antriebsleistung und je nach aufgenommener Nutzlast durch die zur Verfügung stehende Akkukapazität begrenzt.

Zur Landung von Fluggeräten sind aus dem Stand der Technik verschiedene Verfahren bekannt. In den Druckschriften US 2012/0078451 Al, US 2012/0173053 Al, US 2012/0277934 Al, US 2016/0307450 Al, US 2016/0280393 Al, US 2014/0081484 Al, US 2016/0378121 Al, US 2018/0009546 Al, US 2018/0222602 Al, GB 1 207 951 A, WO 2016/066008 Al, EP 2 708 853 Al und DE 10 2018 120 198 Al werden jeweils Verfahren beschrieben, die sich mit der automatischen Erfassung von Landeplätzen und der automatisierten Ansteuerung und Landung senkrecht startender und landender Fluggeräte befassen.

Darüber hinaus zeigt die CN 110 618 691 A ein kamerabasiertes Präzisionslandeverfahren für eine UAV auf einem Landepad mit konzentrischen Kreisringen. Ein Computer erfasst (u.a. mit **IR-Kamera)** Bilder, detektiert die Kreisringe per Bildverarbeitung (Kanten, **Hough-Kreise)** und bestimmt Abweichungen relativ zum Kamerazentrum. Ein Flugsteuerungsmodul korrigiert die horizontale Position bis zu einem Fehlerschwellwert; Ultraschall liefert die Höhe, und Farbringe können zusätzlich ausgewertet werden.

Ein weiteres Dokument, DOTENCO SERGIU ET AL: "Autonomous Approach and Landing for a Low-Cost Quadrotor Using Monocular Cameras", 19. März 2015 (2015-03-19), 16TH EUROPEAN CONFERENCE - COMPUTER VISION - ECCV 2020, CORNELL UNIVERSITY LIBRARY, 201 OLIN LIBRARY CORNELL UNIVERSITY ITHACA, NY 14853, schlägt ein monokulares Sichtsystem für autonomes Anfliegen und Landen eines **Low-Cost-Quadrotors** vor. Eine vorwärtsgerichtete Kamera erkennt einen kreisförmigen **Landepad-Marker** mittels **Ellipsen-/Kegelschnitt-Detektion** und **Pose-Schätzung,** ohne dass der Marker zunächst direkt unter dem MAV liegen muss. Danach wird eine abwärtsgerichtete Kamera zur Stabilisierung und finalen Landung genutzt; SLAM/PTAM unterstützt die Navigation.

Eine besondere Bauform solcher Fluggeräte sind senkrecht startende Flugzeuge. Eine Ausgestaltung derartiger Flugzeuge wird in der Druckschrift DE 10 2017 112 452 A1 beschrieben. Dieses Flugzeug weist zwei auf gegenüberliegenden Seiten eines Rumpfs angeordnete Flügel auf, wobei an den Flügeln jeweils zwei Antriebseinheiten in an den jeweiligen Einsatzzweck angepassten und mit den Flügeln starr verbundenen Tragelementen, wie beispielsweise Gondeln, schwenkbar gelagert angeordnet sind. Es sind aber auch beispielsweise Flugzeuge bekannt, bei denen kein separater Rumpf ausgebildet ist und der Flügel aus zwei entlang der Längsachse symmetrisch ausgestalteten Flügelhälften gebildet ist, wobei an den Flügelhälften jeweils zwei

Antriebseinheiten in an den jeweiligen Einsatzzweck angepassten und mit den Flügelhälften starr verbundenen Tragelementen schwenkbar gelagert angeordnet sind.

Beim Landen dieser Fluggeräte besteht häufig die Anforderung einen vorgegebenen Landeplatz möglichst exakt anzufliegen und mittig an dem Landeplatz zu landen. Zu diesem Zweck weisen die bekannten Fluggeräte Kameraeinrichtungen auf, mit denen der Landeplatz bei dem Landevorgang erfasst werden kann. Zum autonomen Landen sind an den aus dem Stand der Technik bekannten Landeplätzen werden optische Markierungen zur Markierung einer Mitte des jeweiligen Landeplatzes wie beispielsweise QR-Codes oder Quadrate verwendet. Diese Markierungen werden mit der Kameraeinrichtung erfasst und das Fluggerät auf Grundlage des erfassten Kamerabildes mit Hilfe einer Steuerungseinrichtung in Richtung der Markierung gesteuert.

Zum Einsatz der aus dem Stand der Technik bekannten Verfahren ist es erforderlich, dass die Kameraeinrichtung die an dem Landeplatz angeordnete Markierung bis zur Landung erfassen kann. Bei Fluggeräten zur Auslieferung von Stückgut wird das Stückgut häufig unterhalb des Fluggerätes und meistens mittig am Rumpf des Fluggerätes aufgenommen, sodass in diesem Bereich keine Kameraeinrichtung angeordnet werden kann und außermittig beispielsweise an einer Unterseite eines Flügels bei einem senkrecht startenden und landenden Flugzeug angeordnet werden muss. Aber auch bei der außermittigen Anordnung der Kameraeinrichtung kann die mittig an dem Landeplatz angeordnete Markierung in der letzten Phase der Landung von dem unterhalb des Fluggeräts angeordneten Stückgutteil verdeckt werden, sodass eine exakte Positionierung des Fluggeräts nicht mehr möglich ist.

Um dieses Problem zu vermeiden wurde bereits vorgeschlagen, Markierungen anzupeilen, die außermittig an dem Landeplatz angeordnet sind, sodass die Markierung unabhängig von der Flughöhe des Fluggeräts grundsätzlich von der Kameraeinrichtung erfassbar ist. Bei dem Landeanflug ist es hier erforderlich, das Fluggerät immer so auszurichten, dass die optische Markierung im Sichtfeld der Kameraeinrichtung liegt und von der Kameraeinrichtung erfasst werden kann. Da die Fluggeräte im Vertikalflug, das heißt unter anderem beim Landen, üblicherweise der Windrichtung nach ausgerichtet werden, muss die Flugrichtung des Fluggeräts bei der Landung ständig korrigiert und gleichzeitig weiterhin die Markierung angepeilt und angesteuert werden. Senkrecht startende Flugzeuge müssen üblicherweise in den Wind ausgerichtet werden. Zudem genügt es hierbei üblicherweise nicht lediglich einen Punkt an dem Landeplatz anzupeilen, da durch einen einzigen Punkt an dem Landeplatz die Mitte des Landeplatzes nicht eindeutig vorgegeben ist.

Vor diesem Hintergrund wird es als Aufgabe der Erfindung angesehen, die aus dem Stand der Technik bekannten Verfahren zur Landung eines senkrechts startenden und landenden Fluggeräts an einem vorgegebenen Landeplatz, die hierfür bekannten Fluggeräte und Landesystems den Fluggeräten und Landeplätzen derart weiterzuentwickeln, dass eine möglichst genaue Landung an einem vorgegebenen Landepunkt des Landeplatzes möglich ist und gleichzeitig die hierfür erforderlichen Steuerungseingriffe möglichst gering sind.

Diese Aufgabe wird durch ein Verfahren zur Landung eines senkrechts startenden und landenden Fluggeräts an einem vorgegebenen und durch eine optisch erfassbare kreisförmige Markierung mit einer kreisförmigen Außenkontur bestimmten Landeplatz gelöst, wobei mit einer an dem Fluggerät angeordneten und auf den Landeplatz ausgerichteten Kameraeinrichtung fortlaufend Kamerabilder elektronisch erfasst werden, welche jeweils ein Abbild der mindestens abschnittsweise erfassten Markierung darstellen, wobei jedes Kamerabild in einer Steuerungseinrichtung automatisiert ausgewertet wird, wobei mit der Steuerungseinrichtung ein geometrisches Objekt mit mindestens einer geraden Strecke, die in Bezug auf das Kamerabild eine vorgegebene Streckensteigung aufweist, derart in das Abbild eingepasst wird, dass die Strecke eine Tangente durch einen Berührungspunkt an die mindestens abschnittsweise erfasste Markierung darstellt und wobei die Steuerungseinrichtung das Fluggerät in Richtung des so ermittelten Berührungspunkts steuert. Die Kameraeinrichtung erfasst bei dem erfindungsgemäßen Verfahren im Landeanflug regelmäßig einen Abschnitt der Markierung, sodass das Abbild ein Kreissegment mit einer kreisbogenförmigen Außenkontur zeigt. In das Abbild wird das geometrische Objekt vorteilhafterweise so eingepasst, dass die Strecke eine Tangente an die kreisbogenförmige Außenkontur bildet. Der so ermittelte Berührpunkt wird von der Steuerungseinrichtung als Peilungspunkt angesteuert. Sobald sich nun aber das Fluggerät insbesondere durch geänderte Windverhältnisse um seine vertikale Achse dreht, wird von der Kameraeinrichtung ein anderer Abschnitt der Markierung erfasst. Da die Ausrichtung des geometrischen Objekts grundsätzlich in Bezug auf das Kamerabild feststeht, kann nun einfach ein auf der Markierung gewanderter Berührpunkt ermittelt und als Peilungspunkt verwendet werden. Auf diese Weise landet das Fluggerät immer innerhalb der Markierung, wobei jedoch die Ausrichtung um die vertikale Achse des Fluggeräts nicht vorgegeben wird. Diese Ausrichtung ist in vielen praktische Anwendungen jedoch auch ohne Bedeutung.

Bei dem geometrischen Objekt kann es sich um eine Strecke handeln. Um die Strecke in verschiedenen Kreisquadranten der Markierung beispielsweise an den Außenumfang anlegen zu können, ist erfindungsgemäß vorgesehen, dass die Streckensteigung der Strecke zu Beginn des Landeverfahrens auf Grundlage des zu diesem Zeitpunkt vorliegenden Kamerabilds ermittelt wird. Vorteilhafterweise wird diese Streckensteigung während des gesamten Landevorgangs beibehalten.

Das geometrische Objekt kann erfindungsgemäß aber auch zwei Strecken umfassen, die in einem Winkel zueinander angeordnet sind. Auf diese Weise können ebenfalls verschiedene Quadranten angesteuert werden, wobei zu Beginn des Landeverfahrens festgelegt wird, welche der beiden Strecken den Berührpunkt mit der Markierung bildet, der als Peilungspunkt verwendet werden soll. Diese Strecke bzw. die Streckensteigung dieser Strecke wird dann für den weiteren Landeanflug verwendet.

Vorteilhafterweise ist erfindungsgemäß vorgesehen, dass die Strecke eine Tangente an die Außenkontur darstellt. Die Außenkontur der Markierung ist mit den herkömmlichen Kameraeinrichtungen besonders einfach zu ermitteln.

Es ist aber auch möglich und erfindungsgemäß vorgesehen, dass die Markierung kreisringförmig ausgestaltet ist und die Strecke eine Tangente an eine Innenkontur darstellt. Bei einer kreisringförmigen Ausgestaltung der Markierung ist die Markierung sowohl an der Außenkontur als auch an der Innenkontur scharf abgegrenzt, sodass in diesem Fall auch die Innenkontur einfach ermittelt werden kann.

Denkbar ist aber auch, dass auf Grundlage des Kamerabildes nach einem vorgegebenen Algorithmus ein Kreisradius und eine Kreisposition in dem Abbild berechnet wird, wobei Informationen zu der in dem Abbild erkannten Außenkontur und/oder der Innenkontur berücksichtigt werden.

Vorteilhafterweise ist erfindungsgemäß vorgesehen, dass das Objekt so in das Abbild eingepasst wird, dass die Strecke in einem vorgegebenen Kamerabildbereich die Tangente bildet, wenn das Abbild zwei einander gegenüberliegende Abschnitte der Markierung umfasst. Insbesondere zu Beginn des Landeanflugs ist es möglich, dass das Abbild die gesamte Markierung darstellt. In diesem Fall kann die Strecke an zwei Punkten tangential an die Markierung angelegt werden. Daher ist es zweckmäßig, einen Kamerabildbereich vorzugeben, in dem die Strecke in das Abbild eingepasst wird. Auf diese Weise kann erreicht werden, dass das Fluggerät innerhalb der Markierung landet.

Um die mittige Positionierung des Fluggeräts innerhalb der Markierung besonders einfach und zuverlässig zu erreichen, ist erfindungsgemäß vorgesehen, dass das Objekt so in das Abbild eingepasst wird, dass die Strecke an einem vom Fluggerät aus in Flugrichtung gesehen oberen Halbkreis der Markierung die Tangente bildet, wenn die Kameraeinrichtung in Bezug auf einen Landezielpunkt in Flugrichtung vor dem Landezielpunkt liegt und dass das Objekt so in das Abbild eingepasst wird, dass die Strecke an einem vom Fluggerät aus in Flugrichtung gesehen unteren Halbkreis der Markierung die Tangente bildet, wenn die Kameraeinrichtung in Bezug auf den Landezielpunkt in Flugrichtung hinter dem Landezielpunkt liegt. Bei dem Landezielpunkt handelt es sich um einen vorgegebenen Punkt des Fluggeräts, der möglichst mittig innerhalb der Markierung liegt, wenn das Fluggerät gelandet ist. Dadurch, dass der im Kamerabild beim Erfassen der gesamten Markierung obere Halbkreis angeflogen wird, wenn die Kameraeinrichtung vor dem Landezielpunkt liegt und der untere Halbkreis angeflogen wird, wenn der Landezielpunkt in Flugrichtung vor der Kameraeinrichtung liegt, landet das Fluggerät sicher innerhalb der Markierung.

Zur Ermittlung der Halbkreise oder für die Ermittlung des Berührpunktes kann es vorteilhafterweise vorgesehen sein, dass mit der Steuerungseinrichtung auf Grundlage eines vorgegebenen Bildbearbeitungsalgorithmus das Kamerabild verarbeitet und Kreisparameter der Markierung ermittelt werden. Auf dieser Grundlage kann dann die gesamte Markierung oder beispielsweise die Außenkontur rekonstruiert werden.

Um in diesem Fall, wenn die Strecke an zwei Punkten tangential an die abgebildete Markierung in dem Abbild angelegt werden kann, eine einfache Steuerung des Fluggeräts in Richtung des Zentrums der Markierung zu ermöglichen, kann die Strecke erfindungsgemäß an dem Quadranten des kreisförmigen Abbilds angelegt werden, in dem der Berührpunkt am weitesten von einem Mittelpunkt des Abbilds entfernt ist.

Erfindungsgemäß wird das Objekt vorteilhafterweise so in das Abbild eingepasst, dass die Strecke an einem vom Fluggerät aus in Flugrichtung gesehen rechten Halbkreis der Markierung die Tangente bildet, wenn die Kameraeinrichtung in Bezug auf einen Landezielpunkt in Flugrichtung rechts von dem Landezielpunkt liegt und dass das Objekt so in das Abbild eingepasst wird, dass die Strecke an einem vom Fluggerät aus in Flugrichtung gesehen linken Halbkreis der Markierung die Tangente bildet, wenn die Kameraeinrichtung in Bezug auf den Landezielpunkt in Flugrichtung links von dem Landezielpunkt liegt. Auf diese Weise wird eine zuverlässige Landung des Fluggeräts innerhalb der Markierung erreicht.

Die eingangs gestellte Aufgabe wird auch durch ein Fluggerät zur Durchführung des voranstehenden beschriebenen Verfahrens gelöst, wobei das Fluggerät einen Fluggerätegrundkörper, eine Steuerungseinrichtung und eine Kameraeinrichtung aufweist, wobei die Kameraeinrichtung beabstandet zu mindestens einem Landezielpunkt des Fluggerätegrundkörpers an dem Fluggerätegrundkörper angeordnet ist, wobei sich Kameraabstände bei mehreren Landezielpunkten zu den verschiedenen Landezielpunkten voneinander unterscheiden können. Auf diese Weise wird erreicht, dass die Kameraeinrichtung die Markierung jederzeit während des Landeanflugs mindestens abschnittsweise erfassen kann. Die Kameraeinrichtung ist dabei vorteilhafterweise an einer Unterseite des Fluggeräts angeordnet. Es ist aber auch möglich und erfindungsgemäß vorgesehen, dass die Kameraeinrichtung beispielsweise an einer Seite des Fluggeräts angeordnet und während des Landevorgangs auf den Landeplatz ausgerichtet ist. Sofern es sich bei dem Fluggerät um ein Flugzeug handelt, kann die Kameraeinrichtung beispielsweise vorteilhafterweise an einer Unterseite eines der Flügel angeordnet werden.

Vorteilhafterweise ist erfindungsgemäß vorgesehen, dass die Streckensteigung in Bezug auf ein zweidimensionales Fluggerätekoordinatensystem, das durch eine Längsachse und eine Querachse des Fluggeräts definiert ist, für jeden Landezielpunkt so vorgegeben ist, dass die Streckensteigung einer Senkrechtensteigung einer in das Fluggerätekoordinatensystem projizierten Senkrechten auf einer Verbindungslinie zwischen dem jeweiligen Landezielpunkt und einem Mittelpunkt der Kameraeinrichtung entspricht. Dadurch, dass bei dem erfindungsgemäßen Verfahren das Fluggerät so gesteuert wird, dass die Kameraeinrichtung bei der Landung möglichst unmittelbar oberhalb des Berührpunkts liegt, kann durch diese Vorgabe der Streckensteigung erreicht werden, dass der Landezielpunkt bei der Landung sicher innerhalb der Markierung liegt.

Die der Erfindung zu Grunde liegende Aufgabe wird zudem auch durch ein Landesystem mit einem Landeplatz und dem voranstehend beschriebenen Fluggerät gelöst, wobei ein Kreisradius der Markierung mindestens einem Kameraabstand entspricht. Auf diese Weise kann besonders einfach erreicht werden, dass der dem Kameraabstand zugeordnete Landezielpunkt innerhalb der Markierung liegt, wenn das Fluggerät auf dem Landeplatz gelandet ist.

Um eine möglichst mittige Landung des Landezielpunkts innerhalb der Markierung zu erreichen, ist erfindungsgemäß vorgesehen, dass der Radius dem Kameraabstand entspricht. Da sich durch die erfindungsgemäße Steuerung das Fluggerät bei der Landung innerhalb der Markierung befindet und sich die Kameraeinrichtung auf Grund des angesteuerten Berührpunkts zumindest in unmittelbarer Nähe oder direkt oberhalb zu dem Außenumfang oder dem Innenumfang der Markierung befindet, kann durch die Vorgabe des Radius bestimmt werden, welcher Teil des Fluggeräts mittig oberhalb der Markierung liegt.

Dies kann insbesondere auch für die Auslieferung von Paketen genutzt werden. Sofern beispielsweise ein Paket automatisiert an eine Empfangsstation geliefert werden soll, so könnte diese Empfangsstation vorteilhafterweise mittig innerhalb der Markierung angeordnet sein und der Radius der Markierung könnte dem Kameraabstand zwischen Paketmittelpunkt und Kameraeinrichtung entsprechen. Der Paketmittelpunkt wäre in diesem Fall der Landezielpunkt. Auf diese Weise könnte das Paket einfach zuverlässig an die Empfangsstation übergeben werden.

Eine exakte Positionierung des Landezielpunkts bei der Landung in der Mitte der Markierung kann mit den vorangehend beschriebenen Maßnahmen erfindungsgemäß beispielsweise dadurch erreicht werden, dass a) der Radius dem Kameraabstand entspricht, dass b) die Streckensteigung der Senkrechtensteigung entspricht und dass c) in Abhängigkeit der relativen Lage von Landezielpunkt und Kameraeinrichtung zueinander der obere Halbkreis oder der untere Halbkreis angesteuert werden.

Um beispielsweise mit einem Fluggerät mehrere Pakete transportieren zu können und diese an unterschiedlichen Landeplätzen abliefern zu können ist erfindungsgemäß vorgesehen, dass der Landeplatz mehrere optisch erfassbare kreisförmige Markierungen aufweist, wobei Radien der Markierungen den verschiedenen Kameraabständen entsprechen. Beispielsweise könnten an der Unterseite des Fluggerät drei Pakete angeordnet sein, deren Paketmittelpunkte unterschiedliche Kameraabstände aufweisen. Bei den verschiedenen Landeanflügen kann dann erfindungsgemäß jeweils die Markierung zur Orientierung ausgewählt werden, deren Radius dem, dem abzuliefernden Paket entsprechenden Kameraabstand entspricht.

Zur einfachen Unterscheidung der verwendeten Radien der Markierungen bzw. der diesen Radien zugeordneten Kameraabständen ist vorteilhafterweise vorgesehen, dass die Markierungen unterschiedliche farbig ausgestaltet sind. Beispielsweise könnte die Markierung deren Radius dem Kameraabstand 1 des ersten abzuliefernden Pakets entspricht rot ausgestaltet sein, die Markierung deren Radius dem Kameraabstand 2 des zweiten abzuliefernden Pakets entspricht grün ausgestaltet sein und die Markierung deren Radius dem Kameraabstand 3 des dritten abzuliefernden Pakets entspricht blau ausgestaltet sein.

Um die verschiedenen Markierungen unterscheiden zu können, kann erfindungsgemäß vorteilhafterweise auch vorgesehen sein, dass die Markierungen eindeutige Muster, Strichcodes, Dot-Matrix-Codes oder vergleichbare Identifikationsmerkmale aufweisen. Zudem können die Markierungen selbstleuchtend ausgestaltet sein oder beim Landen angeleuchtet werden, um die Markierungen beim Landen besser erkennen zu können. Eine Beleuchtungseinrichtung zur Beleuchtung der Markierung kann entweder in der Nähe des Landeplatzes oder auch an dem Fluggerät angeordnet sein. Die farbliche Ausgestaltung der Markierung und/oder der Beleuchtung kann vorteilhafterweise so vorgegeben werden, dass diese auch bei Nacht oder bei Nebel besonders gut mit einer geeigneten Kameraeinrichtung sichtbar ist.

Vorteilhafterweise ist erfindungsgemäß vorgesehen, dass die Markierungen konzentrisch zueinander angeordnet sind. Auf diese Weise kann beispielsweise eine Empfangsstation für Pakete mittig innerhalb der Markierungen angeordnet werden. Dadurch, dass das jeweilige Paket durch die Verwendung der dem zugehörigen Kameraabstand zugeordneten Markierung immer oberhalb des mittleren Bereichs der Markierung liegt, wenn das Fluggerät gelandet ist, kann auf diese Weise jedes unterhalb des Fluggeräts angeordnete Paket jeweils sicher in den Empfangsstation abgelegt werden. Neben der farbigen Ausgestaltung der Markierungen ist erfindungsgemäß auch die Verwendung spezieller Muster innerhalb der Markierungen vorgesehen, mit denen die Radien durch die Steuerungseinrichtung des Fluggeräts identifiziert werden können.

Eine besonders einfache Ausgestaltung der Markierungen wird dadurch erreicht, dass die Markierungen kreisringförmig ausgestaltet sind. Es ist jedoch auch möglich und erfindungsgemäß vorgesehen, dass die Markierungen Kreisflächen darstellen.

Weitere vorteilhafte Ausgestaltungen werden anhand von in der Zeichnung dargestellten Ausführungsbeispielen näher erläutert.

Es zeigt:
Fig. 1 eine schematische Darstellung eines erfindungsgemäßen Landesystems und
Figuren 2a bis 2c einen schematisch dargestellten Ablauf des erfindungsgemäßen Verfahrens bei einem erfindungsgemäßen Landesystem.

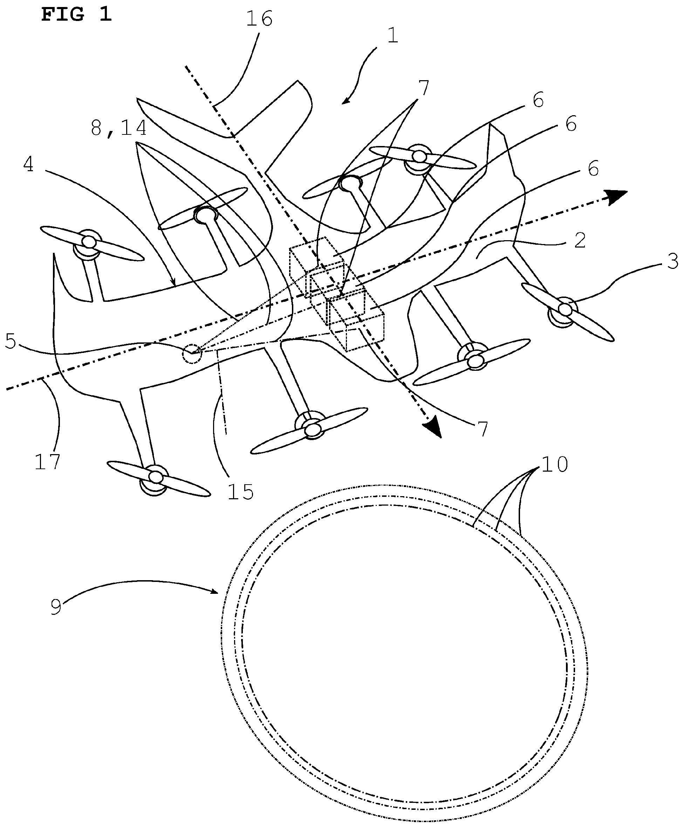

Figur 1 zeigt schematisch ein Fluggerät **1,** wobei es sich bei dem Fluggerät 1 um ein senkrecht startendes und landendes Flugzeug handelt. Zum Starten und Landen können an Flügeln 2 des Fluggeräts 1 angeordnete Rotoren 3 in eine Vertikalfluglage geschwenkt werden. In der Darstellung ist exemplarisch ein Flügel 2 und ein Rotor 3 mit einem Bezugszeichen gekennzeichnet.

Das Fluggerät 1 weist einen Fluggerätegrundkörper **4,** eine nicht gesondert dargestellte Steuerungseinrichtung und eine Kameraeinrichtung 5 auf. Der Fluggerätegrundkörper 4 umfasst unter anderem die Flügel **2.** Die Kameraeinrichtung 5 ist an einem der Flügel 2 beabstandet zu drei Paketen 6 angeordnet, deren Paketmittelpunkte jeweils Landezielpunkte 7 des Fluggerätegrundkörpers 4 bilden. Die Kameraabstände 8 zu den drei Landezielpunkten 7 unterscheiden sich voneinander.

In Figur 1 ist zudem ein Landeplatz 9 schematisch dargestellt. Der Landeplatz 9 weist drei optisch erfassbare kreisförmige Markierungen 10 mit jeweils einer kreisförmigen Außenkontur. Radien der Markierungen 10 entsprechend den verschiedenen Kameraabständen **8.** Die Markierungen 10 sind farbig ausgestaltet und konzentrisch zueinander angeordnet.

Zudem ist in der Figur 1 schematisch die Ermittlung der Streckensteigung anhand einer Senkrechtensteigung einer Senkrechten 15 auf eine Verbindungslinie 14 dargestellt. Die Streckensteigung ist in Bezug auf ein zweidimensionales Fluggerätekoordinatensystem, das durch eine Längsachse 16 und eine Querachse 17 des Fluggeräts 1 definiert ist, für jeden Landezielpunkt 7 so vorgegeben, dass die Streckensteigung einer Senkrechtensteigung der in das Fluggerätekoordinatensystem projizierten Senkrechten 15 auf der Verbindungslinie 14 zwischen dem jeweiligen Landezielpunkt 7 und einem Mittelpunkt der Kameraeinrichtung 5 entspricht. Die Senkrechtensteigung in dem Fluggerätekoordinatensystem wird dabei als Streckensteigung in einem Kamerabildkoordinatensystem übernommen.

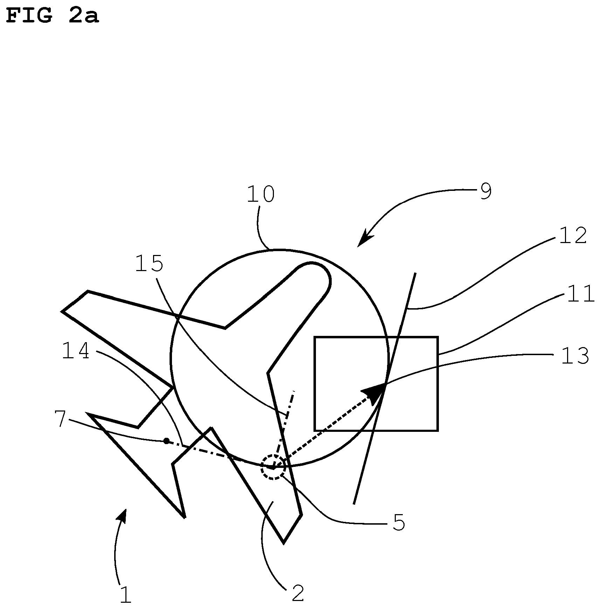

In den Figuren 2a bis 2c wird schematisch ein Landeanflug an einen Landeplatz 9 mit einer optisch erfassbaren kreisförmigen Markierung 10 dar. Mit der an dem Flügel 2 angeordneten Kameraeinrichtung 5 kann ein schematisch dargestelltes rechteckiges Kamerabild 11 erfasst werden. Die in den Figuren 2a bis 2c dargestellten Kamerabilder 11 stellen jeweils ein Abbild der abschnittsweise erfassten Markierung 10 dar. Mit der nicht dargestellten Steuerungseinrichtung wird eine gerade Strecke 12, die in Bezug auf das Kamerabild 11 eine vorgegebene und einer Senkrechtensteigung der Senkrechten 15 entsprechenden Streckensteigung aufweist, derart in das Abbild eingepasst, dass die Strecke 12 eine Tangente durch einen Berührungspunkt 13 an die abschnittsweise erfasste Markierung 10 darstellt. Das Fluggerät 1 wird durch die Steuerungseinrichtung dann in Richtung des so ermittelten Berührungspunkts 13 gesteuert.

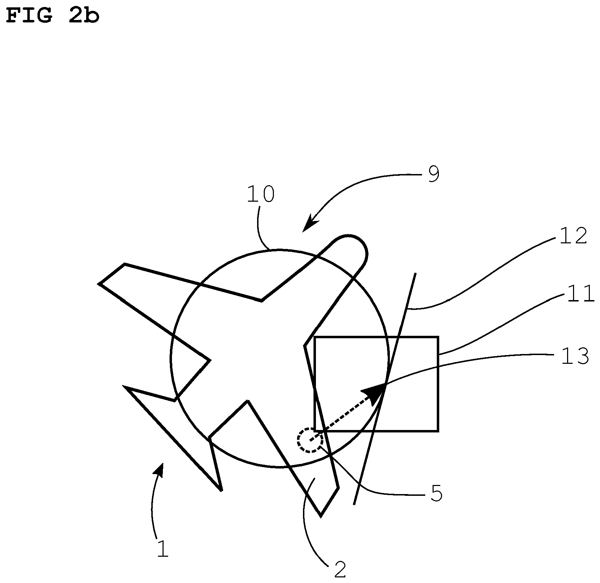

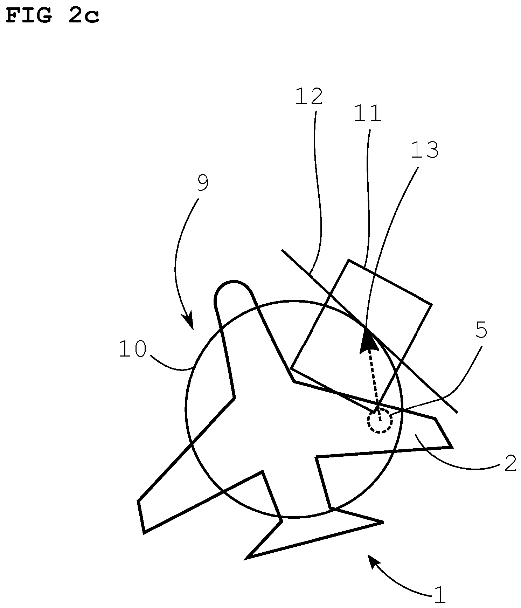

In der Darstellung der Figur 2b ist das Fluggerät 1 bereits etwas näher an den schon in der Darstellung der Figur 2a ermittelten Berührpunkt 13 herangeflogen. In der Darstellung der Figur 2c hat sich das Fluggerät 1 um seine vertikale Achse auf Grund veränderter Windverhältnisse gedreht. Dadurch hat sich auch das von der Kameraeinrichtung 5 erfassbare Kamerabild 11 verlagert. Beim Einpassen der Strecke 12 in das in Figur 2c ermittelte Abbild hat sich der Berührpunkt 13 verlagert und das Fluggerät 1 wird weiter in Richtung des verlagerten Berührpunkts 13 gesteuert.

### Bezugszeichenliste:

- 1: Fluggerät
- 2: Flügel
- 3: Rotor
- 4: Fluggerätegrundkörper
- 5: Kameraeinrichtung
- 6: Paket
- 7: Landezielpunkt
- 8: Kameraabstand
- 9: Landeplatz
- 10: Markierung
- 11: Kamerabild
- 12: Strecke
- 13: Berührpunkt
- 14: Verbindungslinie
- 15: Senkrechte
- 16: Längsachse
- 17: Querachse

## Patentansprüche

1. Verfahren zur Landung eines senkrecht startenden und landenden Fluggeräts (1) an einem vorgegebenen und durch eine optisch erfassbare kreisförmige Markierung (10) mit einer kreisförmigen Außenkontur bestimmten Landeplatz (9), wobei mit einer an einem Fluggerätegrundkörper (4) des Fluggeräts (1) angeordneten und auf den Landeplatz (9) ausgerichteten und beabstandet zu mindestens einem Landezielpunkt (7) des Fluggerätegrundkörpers (4) angeordneten Kameraeinrichtung (5) fortlaufend Kamerabilder (11) elektronisch erfasst werden, welche jeweils ein Abbild der mindestens abschnittsweise erfassten Markierung (10) darstellen, wobei jedes Kamerabild (11) in einer Steuerungseinrichtung automatisiert ausgewertet wird, wobei mit der Steuerungseinrichtung ein geometrisches Objekt in Form einer Geraden mit mindestens einer geraden Strecke (12), die in Bezug auf das Kamerabild (11) eine vorgegebene Streckensteigung aufweist, derart in das Abbild eingepasst wird, dass die Strecke (12) eine Tangente durch einen Berührungspunkt (13) an die mindestens abschnittsweise erfasste Markierung (10) darstellt und wobei die Steuerungseinrichtung das Fluggerät (1) in Richtung des so ermittelten Berührungspunkts (13) steuert, wobei ein Kreisradius der Markierung (10) mindestens einem Kameraabstand (8) zwischen der Kameraeinrichtung (5) und dem Landezielpunkt (7) entspricht.

2. Verfahren gemäß Anspruch **1, dadurch gekennzeichnet, dass** die Strecke (12) eine Tangente an die Außenkontur darstellt.

3. Verfahren gemäß Anspruch 1, **dadurch gekennzeichnet, dass** die Markierung (10) kreisringförmig ausgestaltet ist und die Strecke (12) eine Tangente an eine Innenkontur darstellt.

4. Verfahren gemäß einem der voranstehenden Ansprüche, **dadurch gekennzeichnet, dass** das Objekt so in das Abbild eingepasst wird, dass die Strecke (12) in einem vorgegebenen Kamerabildbereich die Tangente bildet, wenn das Abbild zwei einander gegenüberliegende Abschnitte der Markierung (10) umfasst.

5. Verfahren gemäß einem der Ansprüche 1 bis 3, **dadurch gekennzeichnet, dass** das Objekt so in das Abbild eingepasst wird, dass die Strecke (12) an einem vom Fluggerät (1) aus in Flugrichtung gesehen oberen Halbkreis der Markierung (10) die Tangente bildet, wenn die Kameraeinrichtung (5) in Bezug auf einen Landezielpunkt (7) in Flugrichtung vor dem Landezielpunkt (7) liegt und dass das Objekt so in das Abbild eingepasst wird, dass die Strecke (12) an einem vom Fluggerät (1) aus in Flugrichtung gesehen unteren Halbkreis der Markierung (10) die Tangente bildet, wenn die Kameraeinrichtung (5) in Bezug auf den Landezielpunkt (7) in Flugrichtung hinter dem Landezielpunkt (7) liegt.

6. Fluggerät (1) zur Durchführung des Verfahrens gemäß einem der Ansprüche 1 bis 5, wobei das Fluggerät (1) einen Fluggerätegrundkörper (4), eine Steuerungseinrichtung und eine Kameraeinrichtung (5) aufweist, wobei die Kameraeinrichtung (5) beabstandet zu mindestens einem Landezielpunkt (7) des Fluggerätegrundkörpers (4) an dem Fluggerätegrundkörper (4) angeordnet ist, wobei sich Kameraabstände (8) bei mehreren Landezielpunkten (7) zu den verschiedenen Landezielpunkten (7) voneinander unterscheiden können.

7. Fluggerät (1) gemäß Anspruch 6, **dadurch gekennzeichnet, dass** die Streckensteigung in Bezug auf ein zweidimensionales Fluggerätekoordinatensystem, das durch eine Längsachse (16) und eine Querachse (17) des Fluggeräts (1) definiert ist, für jeden Landezielpunkt (7) so vorgegeben ist, dass die Streckensteigung einer Senkrechtensteigung einer in das Fluggerätekoordinatensystem projizierten Senkrechten (15) auf einer Verbindungslinie (14) zwischen dem jeweiligen Landezielpunkt (7) und einem Mittelpunkt der Kameraeinrichtung (5) entspricht.

8. Landesystem mit einem Landeplatz (9) mit einer optisch erfassbaren kreisförmigen Markierung (10) und einem Fluggerät (1) gemäß Anspruch 6 oder Anspruch 7, **dadurch gekennzeichnet, dass** ein Kreisradius der Markierung (10) mindestens einem Kameraabstand (8) entspricht.

9. Landesystem gemäß Anspruch 8, **dadurch gekennzeichnet, dass** der Landeplatz (9) mehrere optisch erfassbare kreisförmige Markierungen (10) aufweist, wobei Radien der Markierungen (10) den verschiedenen Kameraabständen (8) entsprechen.

10. Landesystem gemäß Anspruch 9, **dadurch gekennzeichnet, dass** die Markierungen (10) unterschiedliche farbig ausgestaltet sind.

11. Landesystem gemäß Anspruch 9 oder Anspruch 10, **dadurch gekennzeichnet, dass** die Markierungen (10) konzentrisch zueinander angeordnet sind.

12. Landesystem gemäß einem der Ansprüche 9 bis 11, **dadurch gekennzeichnet, dass** die Markierungen (10) kreisringförmig ausgestaltet sind.

## Claims

1. Method for landing a vertically taking-off and landing aircraft (1) at a predefined landing site (9) determined by an optically detectable circular marking (10) having a circular outer contour, wherein camera images (11) are continuously captured electronically by means of a camera device (5) arranged on an aircraft main body (4) of the aircraft (1), aligned toward the landing site (9), and arranged at a distance from at least one landing target point (7) of the aircraft main body (4), each of said camera images representing an image of the marking (10) captured at least in sections, wherein each camera image (11) is automatically evaluated in a control device, wherein, by means of the control device, a geometric object in the form of a straight line with at least one straight segment (12), which has a predefined segment slope with respect to the camera image (11), is fitted into the image in such a way that the segment (12) represents a tangent through a point of tangency (13) to the marking (10) captured at least in sections, and wherein the control device controls the aircraft (1) in the direction of the point of tangency (13) determined in this way, wherein a circle radius of the marking (10) corresponds to at least one camera distance (8) between the camera device (5) and the landing target point (7).

2. Method according to claim 1, **characterized in that** the segment (12) represents a tangent to the outer contour.

3. Method according to claim 1, **characterized in that** the marking (10) is configured in the form of a circular ring and the segment (12) represents a tangent to an inner contour.

4. Method according to one of the preceding claims, **characterized in that** the object is fitted into the image in such a way that the segment (12) forms the tangent in a predefined camera image region when the image comprises two mutually opposite sections of the marking (10).

5. Method according to one of claims 1 to 3, **characterized in that** the object is fitted into the image in such a way that the segment (12) forms the tangent on an upper semicircle of the marking (10), as seen from the aircraft (1) in the direction of flight, when the camera device (5), with respect to a landing target point (7), is located in front of the landing target point (7) in the direction of flight, and that the object is fitted into the image in such a way that the segment (12) forms the tangent on a lower semicircle of the marking (10), as seen from the aircraft (1) in the direction of flight, when the camera device (5), with respect to the landing target point (7), is located behind the landing target point (7) in the direction of flight.

6. Aircraft (1) for carrying out the method according to one of claims 1 to 5, wherein the aircraft (1) has an aircraft main body (4), a control device, and a camera device (5), wherein the camera device (5) is arranged on the aircraft main body (4) at a distance from at least one landing target point (7) of the aircraft main body (4), wherein, in the case of several landing target points (7), camera distances (8) to the various landing target points (7) may differ from one another.

7. Aircraft (1) according to claim 6, **characterized in that** the segment slope is specified, with respect to a two-dimensional aircraft coordinate system defined by a longitudinal axis (16) and a transverse axis (17) of the aircraft (1), for each landing target point (7) in such a way that the segment slope corresponds to a perpendicular slope of a perpendicular (15), projected into the aircraft coordinate system, to a connecting line (14) between the respective landing target point (7) and a center point of the camera device (5).

8. Landing system comprising a landing site (9) having an optically detectable circular marking (10) and an aircraft (1) according to claim 6 or claim 7, **characterized in that** a circle radius of the marking (10) corresponds to at least one camera distance (8).

9. Landing system according to claim 8, **characterized in that** the landing site (9) has several optically detectable circular markings (10), wherein radii of the markings (10) correspond to the various camera distances (8).

10. Landing system according to claim 9, **characterized in that** the markings (10) are configured in different colors.

11. Landing system according to claim 9 or claim 10, **characterized in that** the markings (10) are arranged concentrically with respect to one another.

12. Landing system according to one of claims 9 to 11, **characterized in that** the markings (10) are configured in the form of circular rings.

## Revendications

1. Procédé d'atterrissage d'un aéronef (1) à décollage et atterrissage verticaux sur une aire d'atterrissage prédéfinie (9) déterminée par un marquage circulaire (10) détectable optiquement et présentant un contour extérieur circulaire, des images de caméra (11) étant acquises électroniquement en continu au moyen d'un dispositif de caméra (5) disposé sur un corps de base d'aéronef (4) de l'aéronef (1), orienté vers l'aire d'atterrissage (9) et disposé à distance d'au moins un point cible d'atterrissage (7) du corps de base d'aéronef (4), lesdites images de caméra représentant chacune une image du marquage (10) détecté au moins par sections, chaque image de caméra (11) étant évaluée automatiquement dans un dispositif de commande, un objet géométrique sous la forme d'une droite comportant au moins un segment droit (12), qui présente, par rapport à l'image de caméra (11), une pente de segment prédéfinie, étant ajusté dans l'image au moyen du dispositif de commande de telle sorte que le segment (12) représente une tangente, passant par un point de tangence (13), au marquage (10) détecté au moins par sections, et le dispositif de commande pilotant l'aéronef (1) en direction du point de tangence (13) ainsi déterminé, un rayon du cercle du marquage (10) correspondant à au moins une distance de caméra (8) entre le dispositif de caméra (5) et le point cible d'atterrissage (7).

2. Procédé selon la revendication 1, **caractérisé en ce que** le segment (12) représente une tangente au contour extérieur.

3. Procédé selon la revendication 1, **caractérisé en ce que** le marquage (10) est configuré sous la forme d'un anneau circulaire et le segment (12) représente une tangente à un contour intérieur.

4. Procédé selon l'une des revendications précédentes, **caractérisé en ce que** l'objet est ajusté dans l'image de telle sorte que le segment (12) forme la tangente dans une région prédéfinie de l'image de caméra lorsque l'image comprend deux sections opposées l'une à l'autre du marquage (10).

5. Procédé selon l'une des revendications 1 à 3, **caractérisé en ce que** l'objet est ajusté dans l'image de telle sorte que le segment (12) forme la tangente sur un demi-cercle supérieur du marquage (10), vu depuis l'aéronef (1) dans le sens de vol, lorsque le dispositif de caméra (5), par rapport à un point cible d'atterrissage (7), se trouve devant le point cible d'atterrissage (7) dans le sens de vol, et **en ce que** l'objet est ajusté dans l'image de telle sorte que le segment (12) forme la tangente sur un demi-cercle inférieur du marquage (10), vu depuis l'aéronef (1) dans le sens de vol, lorsque le dispositif de caméra (5), par rapport au point cible d'atterrissage (7), se trouve derrière le point cible d'atterrissage (7) dans le sens de vol.

6. Aéronef (1) destiné à la mise en œuvre du procédé selon l'une des revendications 1 à 5, l'aéronef (1) comprenant un corps de base d'aéronef (4), un dispositif de commande et un dispositif de caméra (5), le dispositif de caméra (5) étant disposé sur le corps de base d'aéronef (4) à distance d'au moins un point cible d'atterrissage (7) du corps de base d'aéronef (4), les distances de caméra (8), dans le cas de plusieurs points cibles d'atterrissage (7), pouvant différer les unes des autres pour les différents points cibles d'atterrissage (7).

7. Aéronef (1) selon la revendication 6, **caractérisé en ce que** la pente de segment est prédéfinie, par rapport à un système de coordonnées bidimensionnel de l'aéronef, défini par un axe longitudinal (16) et un axe transversal (17) de l'aéronef (1), pour chaque point cible d'atterrissage (7) de telle sorte que la pente de segment correspond à une pente de perpendiculaire d'une perpendiculaire (15), projetée dans le système de coordonnées de l'aéronef, à une ligne de liaison (14) entre le point cible d'atterrissage (7) respectif et un point central du dispositif de caméra (5).

8. Système d'atterrissage comprenant une aire d'atterrissage (9) comportant un marquage circulaire (10) détectable optiquement et un aéronef (1) selon la revendication 6 ou la revendication 7, **caractérisé en ce qu'**un rayon du cercle du marquage (10) correspond à au moins une distance de caméra (8).

9. Système d'atterrissage selon la revendication 8, **caractérisé en ce que** l'aire d'atterrissage (9) comporte plusieurs marquages circulaires (10) détectables optiquement, les rayons des marquages (10) correspondant aux différentes distances de caméra (8).

10. Système d'atterrissage selon la revendication 9, **caractérisé en ce que** les marquages (10) sont configurés avec des couleurs différentes.

11. Système d'atterrissage selon la revendication 9 ou la revendication 10, **caractérisé en ce que** les marquages (10) sont disposés concentriquement les uns par rapport aux autres.

12. Système d'atterrissage selon l'une des revendications 9 à 11, **caractérisé en ce que** les marquages (10) sont configurés sous la forme d'anneaux circulaires.
